Europäisches Patentamt

European Patent Office

Office européen des brevets

(11) Veröffentlichungsnummer: **0 335 007**
**A2**

## (12) EUROPÄISCHE PATENTANMELDUNG

(21) Anmeldenummer: **88121456.3**

(22) Anmeldetag: **22.12.88**

(51) Int. Cl.⁴: **F16F 13/00**

(30) Priorität: **26.03.88 DE 3810309**

(43) Veröffentlichungstag der Anmeldung:
**04.10.89 Patentblatt 89/40**

(84) Benannte Vertragsstaaten:
**BE FR GB IT NL SE**

(71) Anmelder: **Boge A.G.**
**Bogestrasse 50**
**D-5208 Eitorf/Sieg(DE)**

(72) Erfinder: **Schiffner, Klaus**
**Himmelsburger Strasse 141**
**D-5483 Bad Neuenahr-Ahrweiler(DE)**

(54) **Hydraulisch dämpfendes Gummilager.**

(57) Hydraulisch dämpfendes Gummilager, bestehend aus einem Innenrohr, einem dazu mit Abstand angeordneten Außenrohr und dazwischen eingesetztem Gummiteil, in welchem dämpfungsmittelgefüllte, hydraulisch über Drosselkanäle miteinander verbundene Kammern ausgebildet und nach außen abgedichtet sind. Ein derartiges Gummilager soll nicht nur Schwingungen mit kleinen Amplituden dämpfen, sondern Schwingungen mit großen Amplituden ungedämpft passieren lassen. Zur Lösung dieses Problems sind mindestens zwei Kammern über einen, mindestens ein Ventil aufweisenden Kanal miteinander verbunden.

Fig. 1

EP 0 335 007 A2

# Hydraulisch dämpfendes Gummilager

Die Erfindung bezieht sich auf ein hydraulisch dämpfendes Gummilager, bestehend aus einem Innenrohr, einem dazu mit Abstand angeordneten Außenrohr und dazwischen eingesetztem Gummiteil, in welchem dämpfungsmittelgefüllte, hydraulisch über Drosselkanäle miteinander verbundene Kammern ausgebildet und nach außen abgedichtet sind.

Es sind Gummilager bekannt (z.B. DE-AS 19 42 853, DE-OS 36 17 787, DE-OS 36 31 620), bei denen zwischen einem Innenrohr und einem im Abstand dazu angeordneten Außenrohr ein Gummiteil eingesetzt ist. Die im Gummiteil vorgesehenen Kammern dienen dazu, die Federkonstante und die Schwingungsdämpfung in Abhängigkeit von der radialen Richtung wählbar zu machen. Das Gummilager hat hierbei eine niedrige dynamische Federkonstante und eine schwache Dämpfung in einer durch die Kammern gehenden Richtung. In einer Richtung senkrecht hierzu ist eine wesentlich höhere Federkonstante vorhanden. Zusätzlich ist zwischen den Kammern ein eine Drosselstelle bildender Verbindungskanal vorgesehen. Der Verbindungskanal bewirkt einen gedrosselten Flüssigkeitsausgleich zwischen den mit Dämpfungsmittel gefüllten Kammern, wodurch das Gummilager in radialer Richtung stark gedämpft wird. Dabei erfolgt ein Druckausgleich zwischen dem Dämpfungsmittel in den Kammern in radialer Richtung dadurch, daß das Dämpfungsmittel von einer zur anderen Kammer verdrängt wird. Dieser Verdrängungsvorgang nimmt eine bestimmte Zeit in Anspruch, die das Dämpfungsmittel benötigt um durch den Verbindungskanal zu fließen. Bei einem Gummilager dieser Art werden Schwingungen mit kleinen Amplituden gedämpft.

Nachteilig ist bei diesen Ausführungsformen, daß Schwingungen mit großen Amplituden eine Blockierung des Verbindungskanales zur Folge haben, da nicht genügend Dämpfungsmittel durch die Drosselstelle fließen kann. Bei Auftreten derartiger Schwingungen blockiert das Lager.

Aufgabe der Erfindung ist es, ein hydraulisch dämpfendes Gummilager zu schaffen, welches nicht nur Schwingungen mit kleinen Amplituden dämpft, sondern das Schwingungen mit großen Amplituden ungedämpft passieren läßt.

Zur Lösung dieser Aufgabe ist erfindungsgemäß vorgesehen, daß mindestens zwei Kammern über einen, mindestens ein Ventil aufweisenden Kanal miteinander verbunden sind.

Vorteilhaft ist bei dieser Ausbildung, daß zu dem bereits bekannten Drosselkanal ein weiterer Kanal als Bypaß parallel geschaltet wird. über den normalen Drosselkanal werden Schwingungen mit kleinen Amplituden gedämpft, während bei Schwingungen mit großen Amplituden aufgrund der großen zu bewältigenden Menge an Dämpfungsmittel dieser Drosselkanal blockiert und durch den erhöhten Druck in einer Kammer das Ventil im parallel geschalteten Kanal öffnet und das Dämpfungsmittel nahezu ungedämpft in die gegenüberliegende Kammer fließen läßt.

Derartige Schwingungen mit großen Amplituden sind zum Beispiel vcn Gummilagern im Achs-Lenker aufzufangen, wenn Schwellen quer zur Fahrbahn verlaufen, so daß die Räder eines Fahrzeuges über eine solche Schwelle gelangen.

Nach einem wesentlichen Merkmal ist vorgesehen, daß der Kanal einen Strömungsquerschnitt aufweist, der größer ist als der Querschnitt des Drosselkanales.

Vorteilhaft ist hierbei, daß bei öffnen des Ventiles der Kanal so bemessen ist, daß keinerlei Dämpfung durch den

Kanal selbst erfolgt und das Dämpfungsmittel nahezu ungedämpft von der einen Kammer in die andere Kammer strömen kann.

In Ausgestaltung der Erfindung ist vorgesehen, daß für jede Strömungsrichtung des Dämpfungsmittels ein Ventil vorgesehen ist.

Eine weitere wesentliche Ausführungsform sieht vor, daß als Ventil eine elastische Gummilippe vorgesehen ist.

Für den Fall, daß die Gummilippe in etwa quer zum Kanal angeordnet ist, läßt sich eine solche Gummilippe in beiden Strömungsrichtungen auslenken, so daß mit einer einzigen Gummilippe ein Ventil für jede Strömungsrichtung geschaffen werden kann.

Nach einer besonders günstigen fertigungstechnischen Ausführungsform ist die elastische Gummilippe Bestandteil des Glummiteiles.

In Ausgestaltung der Erfindung ist die elastische Gummilippe mit dem Zwischenrohr fest verbunden.

In weiterer Ausgestaltung weist das Gummiteil eine als Kanal ausgebildete Aussparung auf, in der gleichzeitig die Gummilippe angeordnet ist. Bei dieser Ausführung ist das Gummiteil, der Kanal wie auch die Gummilippe einteilig und somit Bestandteil des Gummiteiles selbst.

Alternativ durch zum Beispiel spanlose Formgebung kann der Kanal in der Wandung des Zwischenrohres und/oder des Innenrohres ausgebildet werden. Hierbei werden die Metallrohre vor dem Vulkanisieren des Gummiteiles entsprechend geformt.

Bevorzugte Ausführungsbeispiele sind in den Zeichnungen schematisch dargestellt.

Es zeigt:

Figur 1 ein hydraulisch dämpfendes Gummilager im Schnitt

Figur 2 einen Querschnitt durch das in Figur 1 dargestellte Gummilager

Figur 3 und 4 weitere Querschnitte des Gummilagers mit unterschiedlich ausgebildeten Ventilen und Kanälen.

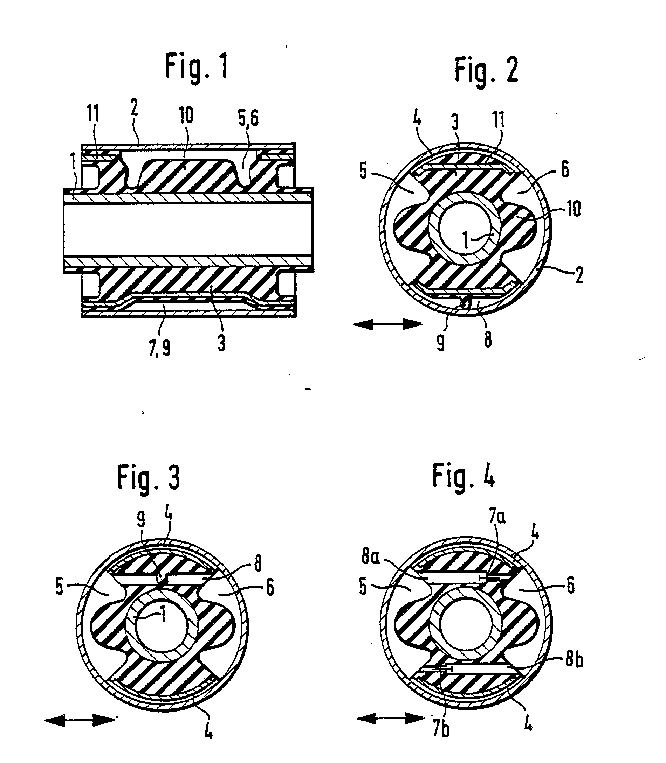

Das in Figur 1 dargestellte hydraulisch dämpfende Gummilager besteht aus einem Innenrohr 1, einem konzentrisch oder exzentrisch dazu im Abstand angeordneten Zwischenrohr 11 und dazwischen eingesetztem Gummiteil 3, in welchem mit einem Dämpfungsmittel gefüllte, hydraulisch über einen Drosselkanal miteinander verbundene Kammern 5, 6 in Form von Hohlräumen des Gummiteiles 3 ausgebildet sind, welche durch ein Außenrohr 2 nach außen abgeschlossen sind. Das zylindrische Innenrohr 1 und das Zwischenrohr 11 ist mit dem Gummiteil 3 durch Vulkanisation verbunden. Die Kammern 5, 6 sind als im äußeren Umfang des Gummiteiles 3 ausgesparte Hohlräume unter Belassung eines hochstehenden Gummianschlagnokkens 10 in jeder Kammer ausgebildet, der zur Erreichung bestimmter Federkennlinien bei einer Belastung in Richtung FY nach dem Anschlag des Außenrohres 2 am Anschlagnocken 10 dient.

Im unteren Bereich der Figur 1 ist das Ventil 7 in Form einer Gummilippe 9 gezeigt. Diese Gummilippe 9 befindet sich im Kanal 8 und verschließt den Kanal 8 zwischen den beiden Kammern 5 und 6. Bei Schwingungen mit großen Amplituden wird durch den erhöhten Innendruck in einer Kammer 5, 6 die Gummilippe 9 ausgelenkt und gibt den Kanal 8 als Bypaß zum Drosselkanal 4 frei.

In der Figur 2 ist im Querschnitt das Innenrohr 1, das Zwischenrohr 11 mit dem dazwischenliegenden Gummiteil 3 und das Außenrohr 2 gezeigt. Die Kammern 5 und 6 werden über den Drosselkanal 4 miteinander verbunden. Der Kanal 8 ist im Querschnitt größer als der Drosselkanal 4 und weist die Gummilippe 9 auf, die als Ventil 7 den Kanal 8 verschließt. Lediglich bei erhöhtem Druck in einer der beiden Kammern 5, 6 wird die Gummilippe seitlich ausgelenkt und läßt das Dämpfungsmittel von einer zur anderen Kammer fließen.

In Figur 3 ist eine weitere Ausführungsform gezeigt, wobei die Kammern 5 und 6 über zwei Drosselkanäle 4 miteinander verbunden sind und der Kanal 8 wird im Bereich des Innenrohres 1 gebildet, wobei die Gummilippe 9 mit der Außenwandung des Innenrohres 1 zusammenarbeitet.

In der Figur 4 ist eine weitere Ausführungsform eines Gummilagers gezeigt, wobei die beiden Kammern 5 und 6 über zwei Drosselkanäle 4 miteinander verbunden sind und zusätzlich jeweils einen Kanal 8a und 8b für jeweils eine Strömungsrichtung des Dämpfungsmittels aufweisen. In jedem dieser Kanäle 8a, 8b ist ein mechanisches Ventil 7a bzw. 7b angeordnet, wobei als Ventil eine Kugel und eine entsprechende Schraubenfeder denkbar wäre. Schwingungen mit großen Amplituden werden bei dieser Ausführungsform je nach Druckrichtung über den entsprechend zugehörigen Kanal 8 aufgefangen.

Bezugszeichenliste

1 - Innenrohr
2 - Außenrohr
3 - Gummiteil
4 - Drosselkanal
5 - Kammer
6 - Kammer
7 - Ventil
8 - Kanal
9 - Gummilippe
10 - Anschlagnocken
11 - Zwischenrohr

**Ansprüche**

1. Hydraulisch dämpfendes Gummilager, bestehend aus einem Innenrohr, einem dazu mit Abstand angeordneten Außenrohr und dazwischen eingesetztem Gummiteil, in welchem dämpfungsmittelgefüllte, hydraulisch über Drosselkanäle miteinander verbundene Kammern ausgebildet und nach außen abgedichtet sind,
dadurch gekennzeichnet,
daß mindestens zwei Kammern (5, 6) über einen, mindestens ein Ventil (7) aufweisenden Kanal (8) miteinander verbunden sind.

2. Gummilager nach Anspruch 1,
dadurch gekennzeichnet,
daß der Kanal (8) einen Strömungsquerschnitt aufweist, der größer ist als der Querschnitt des Drosselkanales (4).

3. Gummilager nach Anspruch 1,
dadurch gekennzeichnet,
daß für jede Strömungsrichtung des Dämpfungsmittels ein Ventil (7) vorgesehen ist.

4. Gummilager nach Anspruch 1,
dadurch gekennzeichnet,
daß als Ventil (7) eine elastische Gummilippe (9) vorgesehen ist.

5. Gummilager nach Anspruch 4,
dadurch gekennzeichnet,
daß die elastische Gummilippe (9) Bestandteil des Gummiteiles (3) ist.

6. Gummilager nach Anspruch 4,
dadurch gekennzeichnet,
daß die elastische Gummilippe (9) mit dem Zwischenrohr (11) fest verbunden ist.

7. Gummilager nach Anspruch 4,
dadurch gekennzeichnet,
daß das Gummiteil (3) eine als Kanal (8) ausgebildete Aussparung aufweist, in der gleichzeitig die Gummilippe (9) angeordnet ist.

8. Gummilager nach Anspruch 1,
dadurch gekennzeichnet,
daß in der Wandung des Zwischenrohres (11) und/oder des Innenrohres (1) der Kanal (8) ausgebildet ist.

Fig. 1

Fig. 2

Fig. 3

Fig. 4